# EUROPÄISCHE PATENTANMELDUNG

(11) **EP 0 633 203 A1**
(43) Veröffentlichungstag der Anmeldung: **11.01.1995**
(21) Anmeldenummer: 94108263.8
(22) Anmeldetag: 28.05.1994
(51) Int. Cl.: B65D 85/60, B65D 5/50

(54) **Verpackungseinsatz für Pralinenverpackungen u. dgl.**

(30) Priorität: 06.07.1993 DE 9310001 U; 13.08.1993 DE 9312105 U
(71) Anmelder: Scholz, Manfred, D-64743 Beerfelden (DE)
(72) Erfinder: Scholz, Manfred, D-64743 Beerfelden (DE)
(74) Vertreter: Katscher, Helmut, Dipl.-Ing.

(57) **Zusammenfassung**

Ein Verpackungseinsatz aus Karton für als flache Stülpschachteln ausgeführte Pralinenverpackungen u. dgl. weist einen Einsatzboden (1) auf, in dem mehrere Ausnehmungen (3) ausgestanzt sind, die jeweils ein Nest (2) mit einem gegenüber dem Einsatzboden (1) vertieften Nestboden (7) aus Karton aufnehmen. Jedes Nest (2) wird von einem gesonderten Nesteinsatz (6) aus Karton gebildet, der den Nestboden (7) und daran angelenkte Nestwände (8) aufweist. Die Nestwände (8) sind am Rand (4) der Ausnehmung (3) befestigt. Vom Rand (4) jeder Ausnehmung (3) des Einsatzbodens (1) sind mehrere Klebelaschen (5) nach unten gefaltet. Die Klebelaschen (5) des Einsatzbodens (1) wird mit den Nestwänden (8) verklebt.

## Beschreibung

Die Erfindung betrifft einen Verpackungseinsatz aus Karton für als flache Stülpschachteln ausgeführte Pralinenverpackungen u. dgl., mit einem Einsatzboden, in dem mehrere Ausnehmungen ausgestanzt sind, die jeweils ein Nest mit einem gegenüber dem Einsatzboden vertieften Nestboden aus Karton aufnehmen.

Derartige Verpackungseinsätze für Pralinenverpackungen u. dgl. wurden bisher fast überwiegend als Tiefzieh-Formteile aus steifer Kunststoffolie hergestellt. Da solche Kunststoff-Formteile nicht oder nur mit unwirtschaftlich großem Aufwand einer Material-Wiederverwendung zugeführt werden können und da auch ihre Entsorgung zunehmend größere Schwierigkeiten bereitet, insbesondere bei der Verbrennung Schadstoffe verursacht, ist man bestrebt, diese Verpackungseinsätze aus Karton herzustellen. Die Entsorgung und ggf. Materialrückgewinnung wird dadurch wesentlich erleichtert und vereinfacht, daß die gesamte Pralinenverpackung oder ähnliche Verpackungen dann als Einkomponentenverpackung aus einheitlichem Material, nämlich Karton, hergestellt werden kann.

Im Zuge dieser Entwicklung sind bereits mehrere Versuche unternommen worden, die als tief gezogene Formteile oder Blister-Formteile aus Kunststoff hergestellten Verpackungseinsätze durch aus Karton bestehende Verpackungseinsätze zu ersetzen. Eine befriedigende Lösung wurde bisher jedoch nicht gefunden.

Es ist zwar möglich, nach Art von Blistereinsätzen geformte Formteile auch aus Papiermasse herzustellen. Die Oberfläche solcher Einsätze aus Papiermasse ist aber verhältnismäßig rauh und daher für die Aufnahme von Pralinen oder ähnlichen empfindlichen Gegenständen nicht geeignet. Außerdem entspricht das optische Erscheinungsbild der Oberfläche nicht den Erwartungen, die an solche Verpackungen gestellt werden.

Bei einem bekannten Verpackungseinsatz der eingangs genannten Gattung ist jeweils der Nestboden durch einander überlappende Umfangseinschnitte so aus dem Einsatzboden ausgestanzt, daß der Nestboden noch über schräg nach oben verlaufende schmale Stege mit dem Einsatzboden verbunden bleibt. Damit wird zwar ein ausschließlich aus Karton bestehender Verpackungseinsatz geschaffen, mit dem die eingangs genannten Schwierigkeiten der Entsorgung bzw. Materialrückgewinnung überwunden werden. Die im Verpackungseinsatz ausgebildeten Nester weisen hierbei aber scharfkantige Ränder auf, die die aufgenommenen Pralinen, insbesondere unverpackte Pralinen, und ähnliche empfindliche Gegenstände beschädigen würden. Außerdem ist der Nestboden über die schrägen Stege jeweils federnd mit dem Einsatzboden verbunden, so daß seine Höhenlage gegenüber dem Einsatzboden nicht festgelegt ist. Die aufgenommenen Pralinen oder dgl. werden daher nicht in einer festgelegten Höhe gehalten, sondern können an einen darüber angeordneten Deckel anstoßen und dadurch beschädigt werden. Abhängig vom Gewicht und der Dicke der Pralinen sowie von der Gestaltung der schrägen Stege ergibt sich, daß der Nestboden bis zum darunterliegenden Boden der Verpackung absinken kann. Dadurch sind Druckbeschädigungen durch von unten wirkende Kräfte möglich.

Aufgabe der Erfindung ist es daher, einen Verpackungseinsatz der eingangs genannten Gattung so auszubilden, daß die einzelnen zur Aufnahme jeweils einer Praline oder dgl. bestimmten Nester jeweils glatte Innenwände aufweisen und ihr Nestboden in einer vorgegebenen festen Höhe innerhalb des Verpackungseinsatzes angeordnet ist.

Diese Aufgabe wird erfindungsgemäß dadurch gelöst, daß jedes Nest von einem gesonderten Nesteinsatz aus Karton gebildet wird, der den Nestboden und daran angelenkte Nestwände aufweist, und daß die Nestwände am Rand der Ausnehmung befestigt sind.

Auf diese Weise wird ein Verpackungseinsatz geschaffen, der vollständig aus Karton besteht und daher einfach und leicht entsorgt werden kann. Die vom Nesteinsatz gebildeten Nestwände sind glatt und weisen zumindest im Bereich der aufgenommenen Praline oder dgl. keine scharfen Kanten auf, die zu Beschädigungen führen könnten. Durch die Verbindung des Nesteinsatzes mit dem Einsatzboden ist der gesamte Nesteinsatz und damit auch dessen Nestboden in seiner Höhe innerhalb des Verpackungseinsatzes festgelegt. Der Einsatzboden kann vollautomatisch gefertigt werden.

Die Ausführung des Einsatzbodens einerseits und der Nesteinsätze andererseits aus getrennten Zuschnitten ermöglicht es, hierfür unterschiedliche Kartonqualitäten zu verwenden, die hinsichtlich der Kartondicke und insbesondere auch der Oberflächenausführung den jeweiligen Anforderungen optimal angepaßt sind. So kann für die Nesteinsätze ein Zuschnittmaterial verwendet werden, das an seiner der Praline oder dgl. zugewandten Innenfläche eine zur Berührung mit Lebensmitteln geeignete Oberflächenbeschichtung aufweist. Für den Einsatzboden kann eine Kartonqualität gewählt werden, die ausschließlich nach den erforderlichen Festigkeitseigenschaften ausgewählt wird.

Auch verschiedenfarbige Kartonmaterialien können verwendet werden, so daß eine optisch ansprechende und werbewirksame Gestaltung erreicht wird.

Gemäß einer ersten Ausführungsform der Erfindung ist vorgesehen, daß vom Rand jeder Ausnehmung des Einsatz boden mehrere Klebelaschen nach unten gefaltet sind und daß die Klebelaschen des Einsatzbodens mit den Nestwänden verklebt sind.

Als besonders vorteilhaft erweist sich, daß durch die Verklebung der Klebelaschen des Einsatzbodens mit den Nestwänden eine wesentliche Versteifung des gesamten Verpackungseinsatzes erzielt wird, auch wenn für den Einsatzboden eine verhältnismäßig dünne Kartonqualität verwendet wird.

Vorzugsweise sind die Klebelaschen an den Außenseiten der Nestwände angeklebt, damit jegliche freiliegenden Kartonkanten im Innenraum jedes Nesteinsatzes vermieden werden.

Vorzugsweise sind die Nester so ausgeführt, daß mindestens zwei gegenüberliegende Nestwände nach oben divergieren. Die Nester erhalten somit eine sich nach unten verjüngende Form. Dadurch wird einerseits das Einlegen und Herausnehmen der aufzunehmenden Gegenstände erleichtert; andererseits wird das Einfügen der Nester in die hierfür vorgesehene Ausnehmungen des Einsatzbodens insbesondere auch für einen automatisierten Fertigungsablauf erleichtert und vereinfacht.

Gemäß einer weiteren vorteilhaften Ausführungsform ist vorgesehen, daß mindestens zwei gegenüberliegende Nestwände an ihren Seitenkanten jeweils eine Rastkerbe aufweisen, in die der Rand der Ausnehmung einrastet. Damit wird eine Verbindung zwischen den einzelnen Nestern und dem Einsatzboden geschaffen, die ohne Verklebung auskommt und deshalb fertigungstechnisch besonders günstig ist.

Als ganz besonders vorteilhaft hat sich eine Ausführungsform erwiesen, die dadurch gekennzeichnet ist, daß mindestens zwei gegenüberliegende Nestwände an ihren nach oben divergierenden Seitenkanten im Abstand unter dem Einsatzboden einen Rastvorsprung aufweisen, und daß von den zwischen diesen beiden Nestwänden verlaufenden Randabschnitten der Ausnehmung jeweils eine Stützlasche nach unten gefaltet ist, die mit den Rastvorsprüngen in Eingriff steht.

Die Anordnung der Rastvorsprünge im mittleren oder unteren Bereich der nach oben divergierenden Seitenkanten bringt es mit sich, daß der gegenseitige Abstand der beiden Rastvorsprünge einer Nestwand geringer ist als die lichte Weite der Ausnehmung; deshalb können die Rastvorsprünge ohne Verformung und ohne Beschädigung in die Ausnehmung eingeführt werden, wobei sie die beiden Stützlaschen federnd nach außen drücken. Sobald die beiden Rastvorsprünge die gegenüberliegenden Stützlaschen passiert haben, federn die Stützlaschen gegeneinander vor und stützen sich an den Oberkanten der Rastvorsprünge ab. Durch diese Abstützung wird ein Herausziehen des Nestes nach oben verhindert, während ein weiteres Eindrücken durch die nach oben divergierenden Seitenkanten der Nestwände verhindert wird. Das Nest ist auf diese Weise einrastend in seiner vorgegebenen Stellung im Einsatzboden festgelegt. Dieser Fertigungsvorgang läßt sich ohne Schwierigkeiten maschinell auch vollautomatisch ausführen.

Weitere vorteilhafte Ausgestaltungen der Erfindung sind Gegenstand weiterer Unteransprüche.

Die Erfindung wird nachfolgend an Ausführungsbeispielen näher erläutert, die in der Zeichnung dargestellt sind. Es zeigt:
Fig. 1 einen Verpackungseinsatz für eine Pralinenverpackung in räumlicher Darstellungsweise,
Fig. 2 einen vergrößerten Teilschnitt längs der Linie II-II in Fig. 1,
Fig. 3 eine Teil-Draufsicht auf einen Zuschnitt, der den Einsatzboden für den Verpackungseinsatz nach Fig. 1 bildet,
Fig. 4 eine Draufsicht auf einen Zuschnitt für einen der Nesteinsätze des Verpackungseinsatzes nach Fig. 1,
Fig. 5 eine Draufsicht auf eine abgewandelte Ausführungsform eines Verpackungseinsatzes,
Fig. 6 einen Teilschnitt ähnlich der Figur 2 bei einer abgewandelten Ausführungsform mit Rastkerben,
Fig. 7 eine Teildraufsicht auf den Einsatzboden für die Ausführungsform nach Figur 6,
Fig. 8 eine Draufsicht auf einen Zuschnitt für den Nesteinsatz nach Figur 6,
Fig. 9 ein Teilschnitt ähnlich den Figuren 2 und 6 bei einer weiteren Ausführungsform mit Rastvorsprüngen,
Fig. 10 eine Teil-Draufsicht auf den Einsatzboden für die Ausführung nach Figur 9 und
Fig. 11 eine Draufsicht auf einen Zuschnitt für das Nest nach Figur 9.

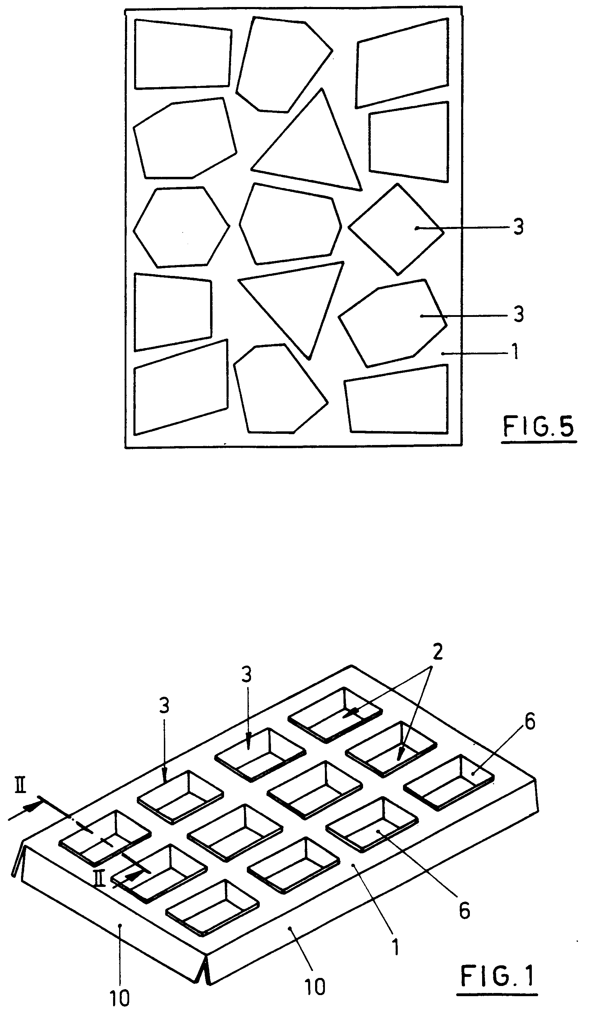

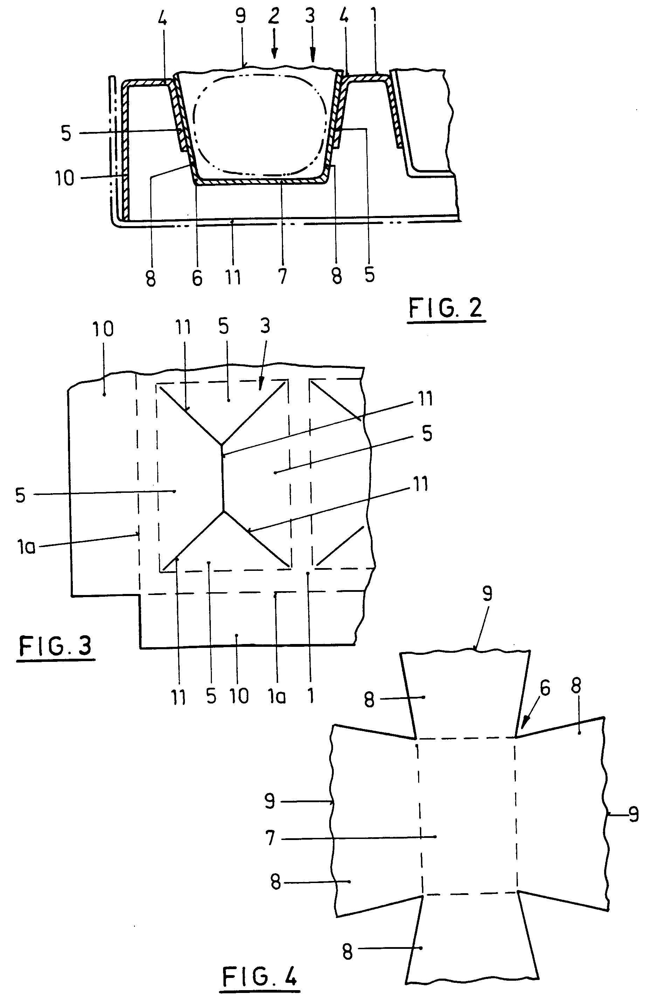

Der in den Fig. 1 und 2 dargestellte Verpackungseinsatz ist beispielsweise für Pralinenverpackungen bestimmt, die üblicherweise als flache Stülpschachteln aus Karton ausgeführt sind, die den Verpackungseinsatz aufnehmen.

Der Verpackungseinsatz besteht aus Karton und weist einen im wesentlichen flachen, horizontalen Einsatzboden 1 auf, in dem mehrere Nester 2 zur Aufnahme jeweils einer Praline angeordnet sind. Hierzu weist der Einsatzboden 1 mehrere ausgestanzte Ausnehmungen 3 auf, die beispielsweise in einem rechtwinkligen Raster von jeweils rechteckigen Ausnehmungen 3 in dem ebenfalls rechteckigen Nestboden 1 ausgestanzt sind.

Vom Rand 4 (Fig. 2) jeder Ausnehmung 3 des Einsatzbodens 1 sind mehrere Klebelaschen 5 nach unten gefaltet.

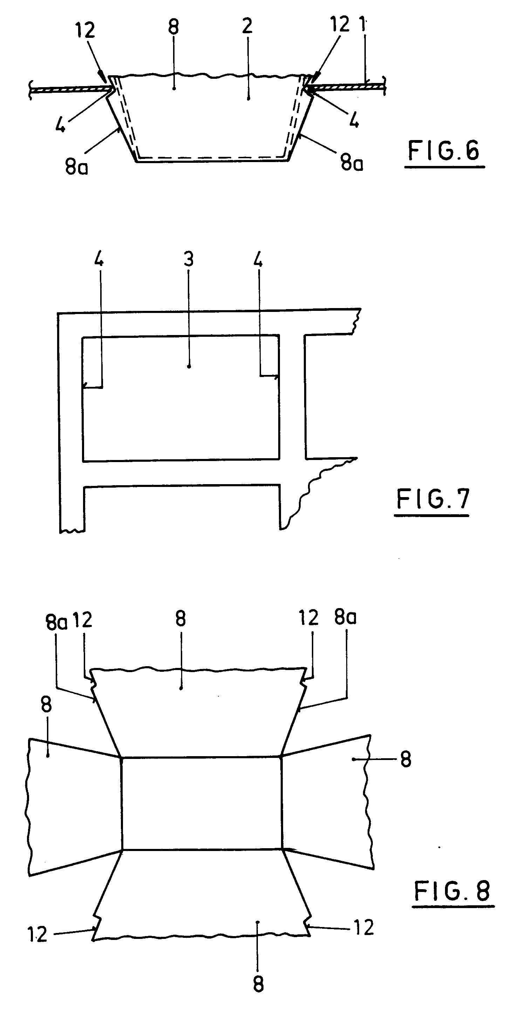

Wie man aus den Fig. 1 und 5 erkennt, bestehen die Ränder 4 der Ausnehmungen 3 des Einsatzbodens 1 aus geradlinigen Randabschnitten, wobei jedem geradlinigen Randabschnitt eine Klebelasche 5 zugeordnet ist.

In jeder Ausnehmung 3 ist ein Nesteinsatz 6 aus Karton angeordnet. Jeder Nesteinsatz 6 besteht aus einem einstückigen Kartonzuschnitt (Fig. 4) mit einem - beim dargestellten Ausführungsbeispiel rechteckigen - Nestboden 7, an dem allseitig Nestwände 8 angelenkt sind. Im aufgerichteten Zustand des Nesteinsatzes 6 (Fig. 1 und 2) sind die Klebelaschen 5 des Einsatzbodens 1 an den Außenseiten der Nestwände 8 angeklebt. Die Oberkanten 9 der Nestwände 8, die aus optischen Gründen mit einem Wellenschnitt ausgeführt sein können, ragen beim dargestellten Ausführungsbeispiel geringfügig über die Oberseite des Einsatzbodens 1 hinaus.

An den äußeren Rändern 1a des Einsatzbodens 1 sind Randstreifen 10 angelenkt und nach unten gefaltet. Sie bilden bei dem aufgerichteten Verpackungseinsatz eine allseitige Stützsarge, die den Einsatzboden 1 in vorgegebener Höhe über einer in Fig. 2 mit strichpunktierten Linien nur angedeuteten flachen Bodenschachtel 11 halten. Damit kann sichergestellt werden, daß bei allen oder mindestens einigen Nesteinsätzen 2 der Nestboden 7 im Abstand über der Ebene liegt, in der die Unterkanten der Stützzarge 10 liegen, so daß ein Abstand zwischen dem Boden der Bodenschachtel 11 und dem Einsatzboden 7 eingehalten wird. Dadurch werden Druckbeschädigungen der aufgenommenen Pralinen vom Boden her vermieden. Außerdem wird erreicht, daß auch bei unterschiedlich dicken Pralinen deren Oberseiten angenähert in einer gemeinsamen Ebene liegen, was für das optische Erscheinungsbild erwünscht ist.

Wie man aus Fig. 3 erkennt, ist die Zuschnittfläche jeder Ausnehmung 3 im Zuschnitt für den Einsatzboden 1 durch Schnitte 11 vollständig und abfallos in die Klebelaschen 5 aufgeteilt; dadurch wird die Herstellung vereinfacht und es wird Abfall vermieden.

Bei dem dargestellten Ausführungsbeispiel sind die Nesteinsätze 6 mit leicht nach oben divergierenden Seitenwänden 8 ausgeführt, um das Einlegen und Herausnehmen der Pralinen zu erleichtern. Außerdem wird dadurch erreicht, daß die mit den Nestern bestückten Einsatzböden raumsparend gestapelt und transportiert werden können. Es versteht sich, daß die Nesteinsätze auch mit flacher verlaufenden Seitenwänden 8 oder mit senkrecht verlaufenden Seitenwänden 8 ausgeführt sein können.

Das in den Figuren 6 bis 8 dargestellte Ausführungsbeispiel unterscheidet sich vom Ausführungsbeispiel nach den Figuren 2 bis 4 dadurch, daß die Nester 2 ohne Klebung durch einfaches Einrasten im Einsatzboden 1 festgelegt sind. Zu diesem Zweck sind zwei gegenüberliegende Nestwände 8 an ihren nach oben divergierend verlaufenden Seitenkanten 8a im oberen Bereich jeweils mit einer seitlichen Rastkerbe 12 versehen. Wie man aus Figur 6 erkennt, rastet in diese Rastkerbe 12 jeweils der Rand 4 der Ausnehmung 3 ein. Dieser Rand 4 ist hierbei ohne Laschen als glatte Randkante ausgeführt.

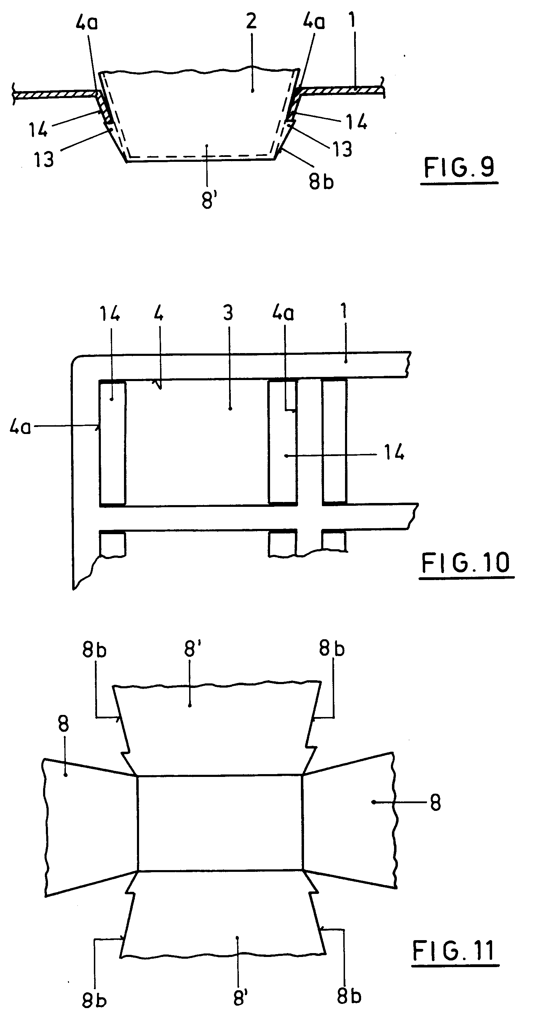

Eine demgegenüber weiter abgewandelte Ausführungsform ist in den Figuren 9 bis 11 gezeigt. Zwei einander gegenüberliegende Nestwände 8, die wie schon bei den vorigen Beispielen mit nach oben divergierenden Seitenkanten 8b ausgeführt sind, weisen im Abstand unter dem Einsatzboden 1 jeweils einen hakenartigen Rastvorsprung 13 auf, dessen Hakenspitze nach oben und außen gerichtet ist. Von den zwischen diesen beiden Nestwänden 8' verlaufenden Randabschnitten 4a des Randes 4 der Ausnehmung 3 (Fig. 10), ist jeweils eine Stützlasche 14 federnd nach unten gefaltet, die mit den Rastvorsprüngen 13 so in Eingriff tritt, daß sich die Unterkante der Stützlasche 14 an den Oberkanten der beiden Rastvorsprünge 13 abstützt.

Das eingesetzt Nest 2 wird dadurch sicher in seiner vorgegebenen Höhenstellung im Einsatzboden 1 gehalten. Eine Verschiebung nach oben wird verhindert, weil sich die Rastvorsprünge 13 an den Unterkanten der Stützlaschen 14 abstützen. Ein tieferes Eindrücken des Nestes 2 wird durch die nach oben divergierende Form der Seitenkanten 8b verhindert, die an den Randabschnitten 4a zur Anlage kommen.

## Patentansprüche

1. Verpackungseinsatz aus Karton für als flache Stülpschachteln ausgeführte Pralinenverpackungen u. dgl., mit einem Einsatzboden, in dem mehrere Ausnehmungen ausgestanzt sind, die jeweils ein Nest mit einem gegenüber dem Einsatzboden vertieften Nestboden aus Karton aufnehmen, dadurch gekennzeichnet, daß jedes Nest (2) von einem gesonderten Nesteinsatz (6) aus Karton gebildet wird, der den Nestboden (7) und daran angelenkte Nestwände (8) aufweist, und daß die Nestwände (8) am Rand (4) der Ausnehmung (3) befestigt sind.

2. Verpackungseinsatz nach Anspruch 1, dadurch gekennzeichnet, daß vom Rand (4) jeder Ausnehmung (3) des Einsatzbodens (1) mehrere Klebelaschen (5) nach unten gefaltet sind und daß die Klebelalaschen (5) des Einsatzbodens (1) mit den Nestwänden (8) verklebt sind.

3. Verpackungseinsatz nach Anspruch 1, dadurch gekennzeichnet, daß die Klebelaschen (5) an den Außenseiten der Nestwände (8) angeklebt sind.

4. Verpackungseinsatz nach Anspruch 1, dadurch gekennzeichnet, daß die Ränder (4) der Ausnehmungen (3) des Einsatzbodens (1) aus geradlinigen Randabschnitten bestehen.

5. Verpackungseinsatz nach Anspruch 2, dadurch gekennzeichnet, daß die Zuschnittfläche jeder Ausnehmung (3) des Einsatzbodens (1) durch Schnitte (11) vollständig und abfallos in Klebelaschen (5) aufgeteilt ist.

6. Verpackungseinsatz nach Anspruch 1, dadurch gekennzeichnet, daß mindestens zwei gegenüberliegende Nestwände (8) nach oben divergieren.

7. Verpackungseinsatz nach Anspruch 1, dadurch gekennzeichnet, daß mindestens zwei gegenüberliegende Nestwände (8) an ihren Seitenkanten (8a) jeweils eine Rastkerbe (12) aufweisen, in die der Rand (4) der Ausnehmung (3) einrastet.

8. Verpackungseinsatz nach Anspruch 1, dadurch gekennzeichnet, daß mindestens zwei gegenüberliegende Nestwände (8) an ihren nach oben divergierenden Seitenwänden (8b) im Abstand unter den Einsatzboden (1) einen Rastvorsprung (13) aufweisen, und daß von den zwischen diesen beiden Nestwänden (8) verlaufenden Randabschnitten (4a) der Ausnehmung (3) jeweils eine Stützlasche (14) nach unten gefaltet ist, die mit den Rastvorsprüngen (13) im Eingriff steht.

9. Verpackungseinsatz nach Anspruch 3, dadurch gekennzeichnet, daß die Nestwände (8) geringfügig über die Oberseite des Einsatzbodens (1) hinausragen.

10. Verpackungseinsatz nach Anspruch 1, dadurch gekennzeichnet, daß an den Rändern (1a) des Einsatzbodens (1) Randstreifen (10) nach unten gefaltet sind, die eine allseitige Stützzarge des Einsatzbodens (1) bilden.

11. Verpackungseinsatz nach Anspruch 10, dadurch gekennzeichnet, daß bei mindestens einigen der Nesteinsätze (2) der Nestboden (7) im Abstand über der Ebene liegt, in der die Unterkanten der Stützzarge (10) liegen.
